# EUROPÄISCHE PATENTSCHRIFT

(11) **EP 3 144 184 B1**
(45) Veröffentlichungstag und Bekanntmachung des Hinweises auf die Patenterteilung: **30.12.2020**
(21) Anmeldenummer: 16189779.8
(22) Anmeldetag: 20.09.2016
(51) Int. Cl.: B60Q 1/50, B60Q 1/08

(54) **VERFAHREN ZUR BELEUCHTUNG EINES VORDEREN FAHRZEUGUMFELDS, BELEUCHTUNGSEINRICHTUNG UND KRAFTFAHRZEUG**
METHOD FOR LIGHTING A FRONT VEHICLE ENVIRONMENT, LIGHTING DEVICE AND VEHICLE
PROCÉDÉ D'ÉCLAIRAGE D'UN ENVIRONNEMENT AVANT DE VÉHICULE, DISPOSITIF D'ÉCLAIRAGE ET VÉHICULE

(30) Priorität: 21.09.2015 DE 102015012022
(43) Veröffentlichungstag der Anmeldung: 22.03.2017
(73) Patentinhaber: AUDI AG, 85045 Ingolstadt (DE)
(72) Erfinder: Funk, Christian, 92339 Beilngries (DE); Barmeyer, Florenz, 02763 Zittau (DE); Armbruster, Tilman, 85055 Ingolstadt (DE); Omerbegovic, Said, 65933 Frankfurt (DE); Reim, Johannes, 85072 Eichstätt (DE)

(56) Entgegenhaltungen:
- EP-A2- 1 334 869
- WO-A1-2015/133302
- DE-A1-102006 050 547
- DE-A1-102013 217 057
- GB-A- 2 517 790
- JP-A- 2008 047 006

## Beschreibung

Die Erfindung betrifft ein Verfahren zur Beleuchtung eines vorderen Fahrzeugumfelds eines Kraftfahrzeugs, wobei zur Ausleuchtung eine Beleuchtungseinrichtung mit einer Steuereinrichtung und wenigstens einem Scheinwerfer verwendet wird, wobei durch den Scheinwerfer mehrere zusammenhängende Raumwinkelsegmente ausleuchtbar sind, wobei die Leuchthelligkeit des Scheinwerfers für jedes der Raumwinkelsegmente separat durch die Steuereinrichtung gesteuert wird, um ein Lichtmuster in das vordere Fahrzeugumfeld abzustrahlen. Daneben betrifft die Erfindung eine Beleuchtungseinrichtung zur Ausleuchtung eines vorderen Fahrzeugumfelds sowie ein Kraftfahrzeug.

Es ist bekannt, Beleuchtungseinrichtungen eines Kraftfahrzeugs zu nutzen, um ein Spur- oder Baustellenlicht in das vordere Fahrzeugumfeld zu projizieren, durch das dem Fahrer visualisiert wird, welchen Fahrraum das Kraftfahrzeug in einem vorausliegenden Streckenabschnitt benötigt. Nachteilig ist hierbei, dass zur Fahrerinformation dargestellte Lichtmuster, insbesondere bei einer automatischen Aktivierung der Darstellung dieser Lichtmuster, häufig nicht selbsterklärend sind, womit sich die bereitgestellte Funktionalität dem Fahrer nicht intuitiv erschließt.

Aus der Druckschrift WO 2015/133 302 A1 ist ein Scheinwerfer für ein Kraftfahrzeug mit Laserlichtquelle bekannt. Dieser kann genutzt werden, um in Fahrtrichtung hintereinander mehrere rechteckige Markierungen auf eine Straße zu projizieren. Die Länge der Markierungen kann beispielsweise in Abhängigkeit eines über einen Regensensor erfassten Niederschlags angepasst werden. Dies kann genutzt werden, um den Fahrer anzuleiten, größere Abstände zu Vorfahrzeugen einzuhalten.

Der Erfindung liegt daher die Aufgabe zugrunde, ein demgegenüber verbessertes Verfahren anzugeben, das einem Fahrer durch eine Beleuchtung des vorderen Fahrzeugumfelds Informationen vermittelt.

Die Aufgabe wird erfindungsgemäß durch ein Verfahren der eingangs genannten Art gelöst, wobei nach Erfüllung einer Aktivierungsbedingung der Scheinwerfer durch die Steuereinrichtung derart angesteuert wird, dass zunächst ein vorgegebenes Initialmuster als Lichtmuster abgestrahlt wird, wonach in mehreren zeitlich aufeinanderfolgenden Schritten das abgestrahlte Lichtmuster stufenweise von dem Initialmuster in ein Informationsmuster überführt wird, wobei das Informationsmuster eine fahrrelevante Information beschreibt, wobei als das Informationsmuster ein Informationsmuster abgestrahlt wird, das einen Streifen in eine Fahrtrichtung des Kraftfahrzeugs umfasst, wobei eine Streifenbreite des Streifens in eine Querrichtung, die senkrecht zu der Fahrtrichtung steht, größer oder gleich einer Fahrzeugbreite des Kraftfahrzeugs ist, und/oder das zwei parallele Streifen in die Fahrtrichtung des Kraftfahrzeugs umfasst, die in die Querrichtung voneinander durch einen Streifenabstand beabstandet sind, wobei der Streifenabstand oder die Summe aus dem Streifenabstand und den Streifenbreiten beider Streifen in die Querrichtung größer oder gleich der Fahrzeugbreite des Kraftfahrzeugs ist, wobei die Länge des Streifens oder der Streifen in dem Informationsmuster in Abhängigkeit eines durch einen oder mehrere Sensoren des Kraftfahrzeugs ermittelten Abstands zu einem vorausfahrenden oder entgegenkommenden weiteren Kraftfahrzeug vorgegeben wird.

Erfindungsgemäß wird vorgeschlagen, dem Darstellen eines Informationsmusters eine Lichtanimation voranzustellen, die ein abgestrahltes Lichtmuster von einem Initialmuster in das Informationsmuster überführt. Ergänzend kann dann, wenn die Aktivierungsbedingung nicht mehr vorliegt und/oder wenn eine Deaktivierungsbedingung vorliegt, also beispielsweise, wenn eine entsprechende Funktion manuell oder automatisch deaktiviert wurde, das Informationsmuster in das Initialmuster zurücküberführt werden. Im Folgenden wird nur die Überführung von dem Initial- in das Informationsmuster beschrieben. Eine Rücküberführung von dem Informationsmuster in das Initialmuster erfolgt entsprechend, wobei das Verfahren zeitlich umgekehrt abläuft. Der zeitliche Abstand der Schritte sowie die jeweiligen Unterschiede zwischen zwei aufeinanderfolgend abgestrahlte Lichtmustern können derart gewählt werden, dass ein quasi-kontinuierlicher Übergang von dem Initialmuster zu dem Informationsmuster erfolgt, für einen Fahrer also keine Sprünge zwischen den einzelnen Lichtmustern erkennbar sind. Beispielsweise können die aufeinanderfolgenden Schritte einen zeitlichen Abstand von maximal 100 ms, maximal 50 ms oder maximal 30 ms aufweisen. Das Initialmuster ist von dem Informationsmuster unterschiedlich. Vorzugsweise sind alle oder zumindest einige der Zwischenmuster, die in den aufeinanderfolgenden Schritten als Lichtmuster abgestrahlt werden, von dem Initialmuster und/oder dem Informationsmuster und/oder jedem der anderen Zwischenmuster unterschiedlich.

Die Aktivierungsbedingung kann auswerten, ob eine manuelle Aktivierung erfolgt ist, beispielsweise ob ein Bedienelement zur manuellen Aktivierung einer entsprechenden Lichtfunktion betätigt wurde. Alternativ oder ergänzend kann die Aktivierungsbedingung Egodaten des Kraftfahrzeugs und/oder Umfelddaten, die insbesondere durch kraftfahrzeugseitige Sensoren erfasst werden, auswerten. Beispielsweise kann ein Spur- oder Baustellenlicht dann aktiviert werden, wenn ermittelt wird, dass der Abstand zu einem vorausliegenden Baustellenbereich einen Grenzwert unterschreitet und/oder wenn eine Spurbreite in einem vorausliegenden Fahrbereich einen vorgegebenen Grenzwert unterschreitet.

Aus dem Stand der Technik sind mehrere Möglichkeiten bekannt, Scheinwerfer derart auszubilden, dass eine Leuchthelligkeit des Scheinwerfers für mehrere Raumwinkelsegmente separat steuerbar ist. Diese Scheinwerfer sollen daher nicht detailliert beschrieben werden. Als Scheinwerfer kann beispielsweise ein Scheinwerfer genutzt werden, der wenigstens eine Lichtquelle und ein Abschwächelement und/oder ein Ablenkelement umfasst, wobei das Abschwächelement beziehungsweise das Ablenkelement insbesondere eine gitterartige Anordnung von Elementen aufweisen, die zur Abschwächung und/oder Ablenkung des Lichts im jeweils zugeordnetem Raumwinkelsegment ansteuerbar sind. Eine Abschwächung kann beispielsweise durch Flüssigkristallzellen als Abschwächelemente erfolgen. Zur Abschwächung oder zur Ablenkung können auch Mikrospiegelaktoren, insbesondere DMD-Mikrospiegelaktoren, genutzt werden. Vorzugsweise ist der Scheinwerfer ein hochauflösender Scheinwerfer. Bei einem hochauflösenden Scheinwerfer können Muster mit hoher Auflösung projiziert werden. Die Leuchthelligkeit der Scheinwerfer kann für wenigstens 10.000, vorzugsweise für wenigstens 100.000, Raumwinkelsegmente separat steuerbar sein. Der Scheinwerfer kann wenigstens 10.000 oder wenigstens 100.000 Abschwäch- beziehungsweise Ablenkelemente umfassen. Es können jedoch auch Scheinwerfer genutzt werden, die einen Ausleuchtungsbereich durch ein schnelles Ablenken eines Lichtstrahls, insbesondere eines Laserstrahls, oder mit einem Array von einzelnen steuerbaren Leuchtelementen beleuchten.

Die fahrrelevante Information ist vorzugsweise eine Fahrzeugbreite oder eine aus der Fahrzeugbreite bestimmte Information. Die aus der Fahrzeugbreite bestimmte Information kann beispielsweise die Summe aus einer Fahrzeugbreite und einem vorgegebenen Abstand sein, den das Fahrzeug zu weiteren Objekten halten soll.

Der Scheinwerfer kann derart angesteuert werden, dass für jedes der Raumwinkelsegmente eine von zwei diskreten Helligkeitsstufen für die Leuchthelligkeit des Scheinwerfers in diesem Raumwinkelsegment ausgewählt wird. Eine dieser Helligkeitsstufen kann einer Leuchthelligkeit von im Wesentlichen Null entsprechen. Dies bedeutet, dass der Scheinwerfer so angesteuert werden kann, dass einige der Raumwinkelsegmente beleuchtet werden und andere der Raumwinkelsegmente nicht beleuchtet werden. Dies ist vorteilhaft, wenn ein weiterer Scheinwerfer eine Grundhelligkeit im Ausleuchtungsbereich bereitstellt, der das Lichtmuster überlagert wird. Die Lichtmuster können jeweils durch wenigstens einen Hellbereich und wenigstens einen Dunkelbereich gebildet sein, wobei die Leuchthelligkeit des Scheinwerfers in dem Hellbereich größer ist als in dem Dunkelbereich. Die Leuchthelligkeit im Dunkelbereich kann im Wesentlichen Null, jedoch auch zwischen Null und der Leuchthelligkeit im Hellbereich sein. Die Überführung von dem Initialmuster in das Informationsmuster kann erfolgen, indem in jedem der aufeinander folgenden Schritte die Form des Hellbereichs geändert wird.

Das Initialmuster kann derart stufenweise in das Informationsmuster überführt werden, dass in jeder Stufe der Überführung für jedes der Raumwinkelsegmente die Leuchthelligkeit in dem aktuell abgestrahlten Lichtmuster maximal so groß ist wie in einem zeitlich darauffolgend abgestrahlten Lichtmuster oder umgekehrt.

Als das Informationsmuster kann ein Informationsmuster abgestrahlt werden, das zwei parallele Streifen in eine Fahrtrichtung des Kraftfahrzeugs umfasst, die in eine Querrichtung, die senkrecht zu der Fahrtrichtung steht, voneinander durch einen Streifenabstand beabstandet sind, wobei der Streifenabstand oder die Summe aus dem Streifenabstand und den Streifenbreiten beider Streifen in die Querrichtung größer oder gleich der Fahrzeugbreite des Kraftfahrzeugs ist. Die Streifen können durch einen Leuchthelligkeitskontrast in dem Lichtmuster ausgebildet sein. Der Streifenabstand oder die Summe können einer Summe aus der Fahrzeugbreite und einem vorgegebenen Mindestabstand entsprechen, den das Kraftfahrzeug zu weiteren Objekten einhalten soll. Die äußeren oder die inneren Begrenzungslinien der Streifen können eine Verlängerung der Fahrzeugränder, insbesondere ausgehend von einem breitesten Bereich des Kraftfahrzeugs, sein.

Als das Initialmuster kann ein Initialmuster abgestrahlt werden, das zwei parallele Streifen in die Fahrtrichtung umfasst, die einen geringeren Abstand und/oder eine größere Breite in die Querrichtung aufweisen als die Streifen im Informationsmuster. Im Initialmuster kann der Streifenabstand im Wesentlichen Null sein, beziehungsweise die Streifen können überlappen. Die Breite jedes der Streifen kann größer oder gleich der Hälfte der Fahrzeugbreite des Kraftfahrzeugs sein. Im Rahmen der Überführung des Initialmusters in das Informationsmuster kann der Streifenabstand in jedem der Schritte vergrößert werden, wobei vorzugsweise die Streifenbreite zugleich reduziert wird. Zudem kann eine Außenbegrenzung des jeweiligen Streifens, die auf der von dem jeweils anderen Streifen abgewandten Seite liegt, im Rahmen der Überführung ihre Position beibehalten.

Als das Informationsmuster kann ein Informationsmuster abgestrahlt werden, das einen Streifen in eine Fahrtrichtung des Kraftfahrzeugs umfasst, wobei eine Streifenbreite des Streifens in eine Querrichtung, die senkrecht zu der Fahrtrichtung steht, größer oder gleich einer Fahrzeugbreite des Kraftfahrzeugs ist. Der Streifen kann durch einen Leuchthelligkeitskontrast dargestellt sein. Die Streifenbreite kann in Fahrtrichtung bis zu einem Streifenende konstant sein.

Als das Initialmuster kann ein Initialmuster abgestrahlt werden, das wenigstens einen Streifen in die Fahrtrichtung umfasst, wobei der oder die Streifen in dem Initialmuster eine geringere Länge in die Fahrtrichtung aufweisen als in dem Informationsmuster. Insbesondere können das Initialmuster und das Informationsmuster abgesehen von einer jeweiligen Streifenlänge identisch sein. Während der Überführung von dem Initialmuster zu dem Informationsmuster kann in jedem Schritt jeweils die Streifenlänge des jeweils abgestrahlten Lichtmusters vergrößert werden. Die Streifen werden somit, insbesondere ausgehend von einem fahrzeugseitigen Endpunkt in Fahrtrichtung, ausgedehnt. Für einen Fahrer entsteht der Eindruck eines "Ausrollens" des beziehungsweise der Streifen.

Die Länge des Streifens oder der Streifen in dem Informationsmuster wird in Abhängigkeit eines Abstands zu einem vorausfahrenden oder entgegenkommenden weiteren Kraftfahrzeug vorgegeben. Der Abstand wird durch einen oder mehrere Sensoren des Kraftfahrzeugs ermittelt. In einer nicht erfindungsgemäßen Alternative kann eine feste Länge des beziehungsweise der Streifen vorgegeben sein.

Der oder die Streifen können geradeaus in die Fahrtrichtung verlaufen. Es ist jedoch auch möglich, dass der oder die Streifen gekrümmt sind. Eine Krümmung des Streifens oder der Streifen in dem Informationsmuster kann in Abhängigkeit eines Lenkwinkels des Kraftfahrzeugs und/oder einer Eigengeschwindigkeit des Kraftfahrzeugs und/oder eines erfassten vorausliegenden Streckenverlaufs vorgegeben werden.

Allgemein ist es möglich, dass das Initialmuster und/oder das Informationsmuster in Abhängigkeit eines Lenkwinkels des Kraftfahrzeugs und/oder einer Eigengeschwindigkeit des Kraftfahrzeugs und/oder eines erfassten vorausliegenden Streckenverlaufs vorgegeben werden. Das Initialmuster kann in Abhängigkeit des Abstands zu einem vorausfahrenden oder entgegenkommenden weiteren Kraftfahrzeug vorgegeben werden. Das Informationsmuster wird in Abhängigkeit des Abstands zu einem vorausfahrenden oder entgegenkommenden weiteren Kraftfahrzeug vorgegeben.

Im Anschluss an die Überführung von dem Initialmuster in das Informationsmuster kann der Scheinwerfer durch die Steuereinrichtung derart angesteuert werden, dass in mehreren zeitlich aufeinanderfolgenden Schritten das abgestrahlte Lichtmuster stufenweise von dem Informationsmuster in ein weiteres Informationsmuster überführt wird. Das weitere Informationsmuster kann die gleiche fahrrelevante Information beschreiben. Durch die Überführung in ein weiteres Informationsmuster kann jedoch die Klarheit der Darstellung für einen Fahrer verbessert werden.

Beispielsweise ist es möglich, als Initialmuster zunächst einen kurzen Lichtstreifen, dessen Breite mit der Fahrzeugbreite korreliert, in das Fahrzeugumfeld zu projizieren und dessen Länge im Rahmen der Überführung in ein Informationsmuster stufenweise in mehreren Stufen zu erhöhen, bis eine vorgegebene Länge erreicht wird. Das Informationsmuster entspricht in diesem Fall einem Streifen mit einer vorgegebenen Länge und einer Breite, die mit der Fahrzeugbreite korreliert. Dieses Informationsmuster kann in ein weiteres Informationsmuster überführt werden, das beispielsweise aus zwei separaten Lichtstreifen besteht, die in Fahrtrichtung verlaufen, wobei der Streifenabstand oder die Summe aus dem Streifenabstand und den Streifenbreiten mit der Fahrzeugbreite korreliert.

Die Überführung von dem Informationsmuster zur dem weiteren Informationsmuster kann entsprechend der vorangehend erläuterten Überführung von dem Initialmuster zu dem Informationsmuster erfolgen. Die hierzu erläuterten Merkmale sind auf die Überführung von dem Informationsmuster zu dem weiteren Informationsmuster übertragbar, wobei das Initialmuster hierbei dem Informationsmuster entspricht und das Informationsmuster dem weiteren Informationsmuster.

Ergänzend oder alternativ ist es möglich, dass vor der Überführung des abgestrahlten Lichtmusters von dem Initialmuster zu dem Informationsmuster der Scheinwerfer durch die Steuereinrichtung derart angesteuert wird, dass das abgestrahlte Lichtmuster in mehreren zeitlich aufeinanderfolgenden Schritten stufenweise von einem Vormuster in das Initialmuster überführt wird, wobei die Aktivierungsbedingung erfüllt wird, wenn das abgestrahlte Lichtmuster dem Initialmuster entspricht. Auch die Überführung von dem Vormuster zu dem Initialmuster kann entsprechend der Überführung von dem Initialmuster zu dem Informationsmuster erfolgen. Die hierzu erläuterten Merkmale können auf die Übertragung von dem Vormuster zu dem Initialmuster übertragen werden, wobei das Initialmuster dem Vormuster und das Informationsmuster dem Initialmuster entspricht.

Neben dem erfindungsgemäßen Verfahren betrifft die Erfindung eine Beleuchtungseinrichtung zur Ausleuchtung eines vorderen Fahrzeugumfelds eines Kraftfahrzeugs, umfassend eine Steuereinrichtung und wenigstens einen Scheinwerfer, wobei durch den Scheinwerfer mehrere zusammenhängende Raumwinkelsegmente ausleuchtbar sind, wobei die Leuchthelligkeit des Scheinwerfers für jedes der Raumwinkelsegmente separat durch die Steuereinrichtung steuerbar ist, um ein Lichtmuster in das vordere Fahrzeugumfeld abzustrahlen, wobei die Beleuchtungseinrichtung zur Durchführung des erfindungsgemäßen Verfahrens ausgebildet ist. Die Beleuchtungseinrichtung kann vorzugsweise zwei Scheinwerfer umfassen. Werden als eines der Lichtmuster zwei Streifen projiziert, kann vorzugsweise jeder der Streifen von einem der Scheinwerfer projiziert werden.

Der Scheinwerfer kann zur Projektion eines hochauflösenden Lichtmusters ausgebildet sein. Die Leuchthelligkeit des Scheinwerfers kann für wenigstens 10.000, insbesondere für wenigstens 100.000, der Raumwinkelsegmente separat durch die Steuereinrichtung steuerbar sein. Beispielsweise kann ein Scheinwerfer mit wenigstens 10.000 beziehungsweise wenigstens 100.000 separat steuerbaren Abschwäch- beziehungsweise Ablenkelementen genutzt werden.

Zudem betrifft die Erfindung ein Kraftfahrzeug, das ein oder mehrere Sensoren und eine erfindungsgemäße Beleuchtungseinrichtung umfasst.

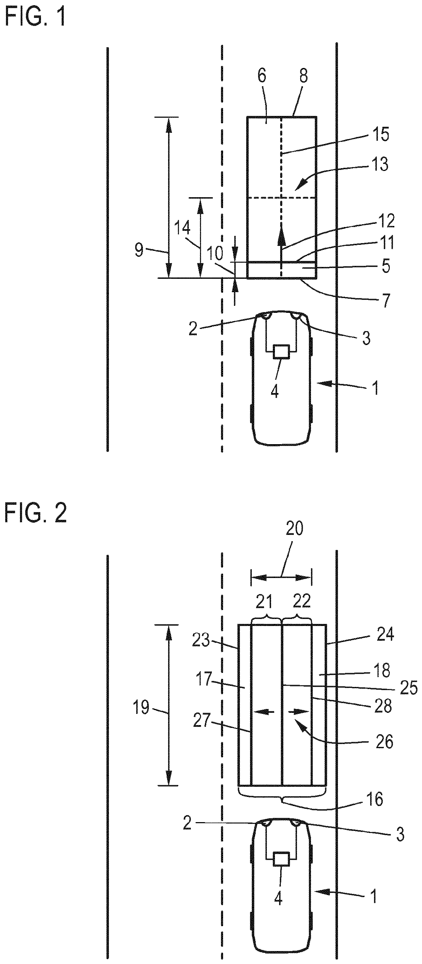

Weitere Vorteile und Einzelheiten der Erfindung zeigen die folgenden Ausführungsbeispiele sowie die zugehörigen Zeichnungen. Dabei zeigen die Figuren 1 bis 4 schematisch Ausführungsbeispiele des erfindungsgemäßen Verfahrens.

Fig. 1 zeigt ein Ausführungsbeispiel eines Verfahrens zur Beleuchtung eines vorderen Fahrzeugumfelds eines Kraftfahrzeugs 1. Zur Ausleuchtung wird eine Beleuchtungseinrichtung genutzt, die zwei Scheinwerfer 2, 3 und eine Steuereinrichtung 4 umfasst. Wird ermittelt, dass eine Aktivierungsbedingung erfüllt ist, so werden die Scheinwerfer 2, 3 durch die Steuereinrichtung 4 derart angesteuert, dass zunächst ein vorgegebenen Initialmuster 5 als Lichtmuster in das Fahrzeugvorfeld projiziert wird. In mehreren zeitlich aufeinanderfolgenden Schritten wird das abgestrahlte Lichtmuster stufenweise von dem Initialmuster 5 in ein Informationsmuster 6 überführt. Das Informationsmuster 6 hat die Form eines Streifens, der sich von einer fahrzeugzugewandten Begrenzungslinie 7 bis zu einer fahrzeugabgewandten Begrenzungslinie 8 mit einer vorgegebenen Länge 9 in Fahrtrichtung erstreckt. Die Breite des Streifens entspricht der Summe aus der Breite des Kraftfahrzeugs und einem vorgegebenen Sicherheitsabstand, den das Kraftfahrzeug von umgebenen Objekten während des Fahrbetriebs halten soll. Das Informationsmuster 6 betrifft somit eine von der Fahrzeugbreite abhängige Information und zeigt die fahrrelevante Information an, welcher Bereich vor dem Kraftfahrzeug bei einer weiteren Geradeausfahrt durchquert wird.

Die Überführung des Initialmusters 5 in das Informationsmuster 6 soll derart erfolgen, dass ein Fahrer diesen Übergang als fließenden Übergang ohne Sprünge zwischen den verschiedenen Lichtmustern wahrnimmt. Das Initialmuster 5 und das Informationsmuster 6 unterscheiden sich bezüglich ihrer Länge 9, 10 in Fahrtrichtung und somit bezüglich der Lage ihrer fahrzeugabgewandten Begrenzungslinien 8, 11. Zur Überführung des Initialmusters 5 in das Informationsmuster 6 soll daher die Begrenzungslinie 11 schrittweise in Richtung des Pfeils 12 verschoben werden, bis sie an der Position der Begrenzungslinie 8 liegt. Vorzugsweise werden mehrere Zwischenmuster als Lichtmuster abgestrahlt, von denen aus Gründen der Übersichtlichkeit nur eines dargestellt ist, bei dem die fahrzeugabgewandte Begrenzungslinie 13 des Zwischenmusters soweit verschoben ist, dass das Zwischenmuster eine Länge 14 aufweist.

Die jeweiligen Lichtmuster werden durch die beiden Scheinwerfer 2, 3 gemeinsam abgestrahlt, wobei der Bereich links der gestrichelten Linie 15 durch den linken der Scheinwerfer 2 und der Bereich rechts der gestrichelten Linie 15 durch den rechten der Scheinwerfer 3 beleuchtet wird.

Figur 2 zeigt ein weiteres Ausführungsbeispiel eines Verfahrens zur Beleuchtung eines vorderen Fahrzeugumfelds eines Kraftfahrzeugs 1, bei dem ein zunächst abgestrahltes Initialmuster 16 schrittweise in mehreren Stufen in ein Informationsmuster überführt wird. Das Informationsmuster ist durch die beiden Streifen 17, 18 gebildet, die in Fahrzeuglängsrichtung verlaufen, eine Länge 19 aufweisen und in Fahrzeugquerrichtung durch den Streifenabstand 20 beabstandet sind. Der Streifenabstand 20 entspricht im Wesentlichen der Fahrzeugbreite, womit durch das Informationsmuster eine fahrrelevante Information beschrieben wird.

Das Initialmuster 16 ist ebenfalls aus zwei Streifen 21, 22 gebildet, wobei die Streifen 21, 22 die gleiche Länge 19 sowie die gleichen seitlichen Begrenzungslinien 23, 24 aufweisen, wie die Streifen 17, 18. Die Streifen 21, 22 weisen jedoch einen Streifenabstand von Null auf. Im Rahmen der Überführung des Initialmusters 16 in das Informationsmuster werden die Streifen an der Mittellinie 25 getrennt und ihre innere Begrenzungslinie stufenweise in die Richtung der Pfeile 26 verschoben, bis sie nach einer Abstrahlung von mehreren Zwischenmustern als Lichtmuster die Position der inneren Begrenzungslinien 27, 28 des Informationsmusters erreichen, womit das Initialmuster 16 in das Informationsmuster überführt ist. Aus Gründen der Übersichtlichkeit sind die einzelnen Zwischenmuster nicht dargestellt.

Die mit Bezug auf Figur 1 und Figur 2 erläuterten Verfahrensabläufe können auch kombiniert werden. So kann, nachdem die zu Figur 1 erläuterte Überführung des Initialmusters 5 in das Informationsmuster 6 abgeschlossen ist, das abgestrahlte Lichtmuster stufenweise von dem Informationsmuster 6 in ein weiteres Informationsmuster, nämlich das in Figur 2 dargestellte Informationsmuster, das aus den Streifen 17, 18 besteht, überführt werden. Alternativ oder ergänzend wäre es möglich, vor den dargestellten Überführungen zunächst eine Überführung von einem Vormuster zu dem Initialmuster durchzuführen, die ähnlich wie die Überführung vom Initialmuster zum Informationsmuster stufenweise in mehreren zeitlich aufeinander folgenden Schritten erfolgen kann.

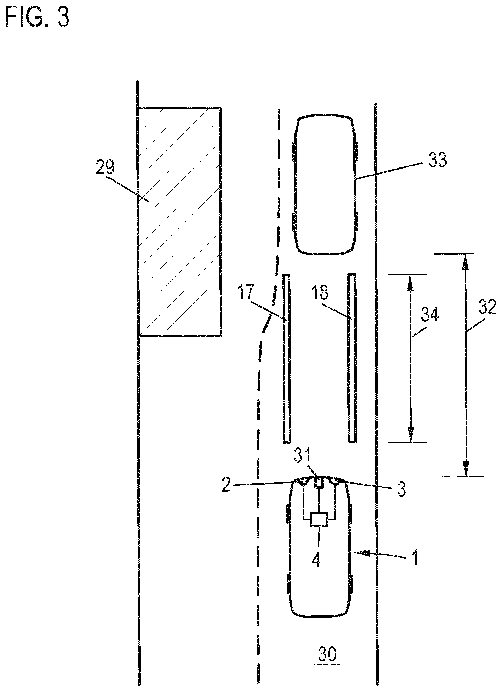

Die Ausstrahlung des Initialmusters als Lichtmuster und die anschließende Überführung des Initialmusters in das Informationsmuster erfolgt, wenn eine Aktivierungsbedingung erfüllt ist. Diese kann erfüllt sein, wenn eine Bedieneingabe an einem Bedienelement erfasst wird. Es ist jedoch auch möglich, das erläuterte Vorgehen automatisch in bestimmten Fahrsituationen durchzuführen. Dies wird im Folgenden mit Bezug auf Figur 3 erläutert.

Figur 3 zeigt eine Fahrsituation, in der das Kraftfahrzeug 1 auf eine Stelle zufährt, an der aufgrund einer Baustelle 29 die Spur 30 schmäler wird. In solchen Fahrsituationen ist es besonders vorteilhaft, dem Fahrer die Breite des Kraftfahrzeugs zu visualisieren. Daher umfasst das Kraftfahrzeug 1 eine Kamera 31, die Bilddaten an die Steuereinrichtung 4 bereitstellt. Durch diese werden die Bilddaten ausgewertet, um, beispielsweise durch eine Erkennung von Spurmarkierungen, eine vorausliegende Fahrbahnverengung zu erkennen. Wird eine derartige Fahrbahnverengung erkannt, so gilt die Aktivierungsbedingung als erfüllt und die Scheinwerfer 2, 3 können wie mit Bezug auf Figur 1 oder 2 erläutert angesteuert werden.

Eine Blendung anderer Verkehrsteilnehmer durch die Projektion eines Lichtmusters soll vermieden werden. Daher wird, wie in Figur 3 dargestellt, das vordere Umfeld des Kraftfahrzeugs 1 durch die Kamera 31 erfasst. Wird ein weiteres Kraftfahrzeug 33 in einem Abstand 32 erfasst, so wird die Länge 34 der Streifen 17, 18 im Informationsmuster derart angepasst, dass die Streifen 17, 18 in einem Abstand vor dem eigenen Kraftfahrzeug 1 endet, der kleiner ist als der Abstand 32 zum weiteren Kraftfahrzeug 33, so dass ein Fahrer des weiteren Kraftfahrzeugs 33 nicht geblendet wird.

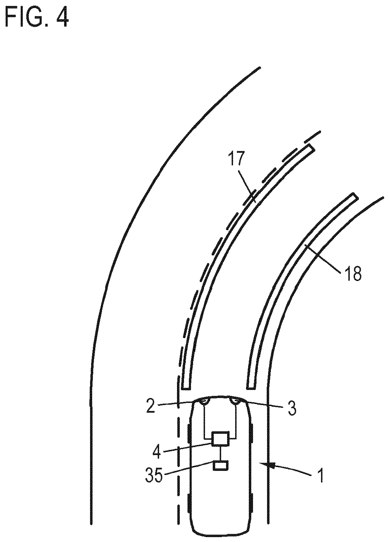

Häufig ist es ausreichend, dem Fahrer die Fahrzeugbreite durch einen oder mehrere gerade Streifen zu visualisieren, wie es in den Figuren 1 bis 3 dargestellt ist. In einigen Fällen ist es jedoch vorteilhaft, die Fahrzeugbreite nicht durch gerade verlaufende Streifen zu visualisieren, sondern dem Fahrer diese Breite gemeinsam mit dem voraussichtlichen weiteren Fahrverlauf zu visualisieren. Ein Beispiel hierfür ist in Figur 4 dargestellt. Das Kraftfahrzeug 1 umfasst einen Lenkwinkelsensor 35, der einen durch einen Fahrer vorgegebenen Lenkwinkel erfasst und an die Steuereinrichtung 4 bereitstellt. Die Steuereinrichtung 4 ermittelt das Informationsmuster daraufhin derart, dass die Streifen 17, 18 gekrümmt sind, wobei ein Krümmungsradius für die Streifen 17, 18 in Abhängigkeit des Lenkwinkels und einer Fahrzeuggeschwindigkeit bestimmt wird. Die Krümmung der Streifen 17, 18 kann so gewählt werden, dass der Krümmungsradius einem Radius eines Kreises entspricht, auf dem sich das Kraftfahrzeug mit der momentanen Geschwindigkeit und dem momentanen Lenkwinkel bewegen würde.

Das Initialmuster und/oder Zwischenmuster, die im Rahmen des Übergangs vom Initialmuster zum Informationsmuster als Lichtmuster abgestrahlt werden, können ebenfalls in Abhängigkeit der Geschwindigkeit und/oder des Lenkwinkels bestimmt werden. Insbesondere können diese einen oder zwei Streifen aufweisen, die die gleiche Krümmung aufweisen wie die Streifen 17, 18.

## Patentansprüche

1. Verfahren zur Beleuchtung eines vorderen Fahrzeugumfelds eines Kraftfahrzeugs (1), wobei zur Ausleuchtung eine Beleuchtungseinrichtung mit einer Steuereinrichtung (4) und wenigstens einem Scheinwerfer (2, 3) verwendet wird, wobei durch den Scheinwerfer (2, 3) mehrere zusammenhängende Raumwinkelsegmente ausleuchtbar sind, wobei die Leuchthelligkeit des Scheinwerfers (2, 3) für jedes der Raumwinkelsegmente separat durch die Steuereinrichtung (4) gesteuert wird, um ein Lichtmuster in das vordere Fahrzeugumfeld abzustrahlen, wobei nach Erfüllung einer Aktivierungsbedingung der Scheinwerfer (2, 3) durch die Steuereinrichtung (4) derart angesteuert wird, dass zunächst ein vorgegebenes Initialmuster (5, 16) als Lichtmuster abgestrahlt wird, wonach in mehreren zeitlich aufeinanderfolgenden Schritten das abgestrahlte Lichtmuster stufenweise von dem Initialmuster (5, 16) in ein Informationsmuster (6) überführt wird, wobei das Informationsmuster (6) eine fahrrelevante Information beschreibt, wobei als das Informationsmuster (6) ein Informationsmuster (6) abgestrahlt wird, das einen Streifen in eine Fahrtrichtung des Kraftfahrzeugs (1) umfasst, wobei eine Streifenbreite des Streifens in eine Querrichtung, die senkrecht zu der Fahrtrichtung steht, größer oder gleich einer Fahrzeugbreite des Kraftfahrzeugs (1) ist, und/oder das zwei parallele Streifen (17, 18, 21, 22) in die Fahrtrichtung des Kraftfahrzeugs (1) umfasst, die in die Querrichtung voneinander durch einen Streifenabstand (20) beabstandet sind, wobei der Streifenabstand (20) oder die Summe aus dem Streifenabstand (20) und den Streifenbreiten beider Streifen (17, 18, 21, 22) in die Querrichtung größer oder gleich der Fahrzeugbreite des Kraftfahrzeugs (1) ist, wobei die Länge des Streifens oder der Streifen (17, 18) in dem Informationsmuster in Abhängigkeit eines Abstands zu einem vorausfahrenden oder entgegenkommenden weiteren Kraftfahrzeug (33) vorgegeben wird, **dadurch gekennzeichnet, dass**
der Abstand zu einem vorausfahrenden oder entgegenkommenden weiteren Kraftfahrzeug durch einen oder mehrere Sensoren ermittelt wird.

2. Verfahren nach Anspruch 1,
**dadurch gekennzeichnet,**
**dass** die fahrrelevante Information eine Fahrzeugbreite oder eine von der Fahrzeugbreite abhängige Information ist.

3. Verfahren nach einem der vorangehenden Ansprüche,
**dadurch gekennzeichnet,**
**dass** das Initialmuster (5, 16) derart stufenweise in das Informationsmuster überführt wird, dass in jeder Stufe der Überführung für jedes der Raumwinkelsegmente die Leuchthelligkeit in dem aktuell abgestrahlten Lichtmusters maximal so groß ist wie in einem zeitlich darauffolgend abgestrahlten Lichtmuster oder umgekehrt.

4. Verfahren nach einem der vorangehenden Ansprüche, wobei das Informationsmusterzwei parallele Streifen (17, 18, 21, 22) in die Fahrtrichtung des Kraftfahrzeugs (1) umfasst,
**dadurch gekennzeichnet,**
**dass** als das Initialmuster (16) ein Initialmuster (16) abgestrahlt wird, das zwei parallele Streifen (21, 22) in die Fahrtrichtung umfasst, die einen geringeren Streifenabstand und/oder eine größere Breite in die Querrichtung aufweisen als die Streifen (17, 18) im Informationsmuster.

5. Verfahren nach einem der vorangehenden Ansprüche,
**dadurch gekennzeichnet,**
**dass** als das Initialmuster (5) ein Initialmuster (5) abgestrahlt wird, das wenigstens einen Streifen in die Fahrtrichtung umfasst, wobei der oder die Streifen in dem Initialmuster (5) eine geringere Länge in Fahrtrichtung aufweisen als der oder die Streifen in dem Informationsmuster (6).

6. Verfahren nach einem der vorangehenden Ansprüche,
**dadurch gekennzeichnet,**
**dass** eine Krümmung des Streifens oder der Streifen (17, 18) in dem Informationsmuster (6) in Abhängigkeit eines Lenkwinkels des Kraftfahrzeugs (1) und/oder einer Eigengeschwindigkeit des Kraftfahrzeugs (1) und/oder eines erfassten vorausliegenden Streckenverlaufs vorgegeben wird.

7. Verfahren nach einem der vorangehenden Ansprüche,
**dadurch gekennzeichnet,**
**dass** im Anschluss an die Überführung von dem Initialmuster (5, 16) in das Informationsmuster (6) der Scheinwerfer (2, 3) durch die Steuereinrichtung (4) derart angesteuert wird, dass in mehreren zeitlich aufeinanderfolgenden Schritten das abgestrahlte Lichtmuster stufenweise von dem Informationsmuster (6) in ein weiteres Informationsmuster überführt wird.

8. Verfahren nach einem der vorangehenden Ansprüche,
**dadurch gekennzeichnet,**
**dass** vor der Überführung des abgestrahlten Lichtmusters von dem Initialmuster (5, 16) zu dem Informationsmuster (6) der Scheinwerfer (2, 3) durch die Steuereinrichtung (4) derart angesteuert wird, dass das abgestrahlte Lichtmuster in mehreren zeitlich aufeinanderfolgenden Schritten stufenweise von einem Vormuster in das Initialmuster überführt wird, wobei die Aktivierungsbedingung erfüllt wird, wenn das abgestrahlte Lichtmuster dem Initialmuster (5, 16) entspricht.

9. Beleuchtungseinrichtung zur Ausleuchtung eines vorderen Fahrzeugumfelds eines Kraftfahrzeugs (1), umfassend eine Steuereinrichtung (4) und wenigstens einen Scheinwerfer (2, 3), wobei durch den Scheinwerfer (2, 3) mehrere zusammenhängende Raumwinkelsegmente ausleuchtbar sind, wobei die Leuchthelligkeit des Scheinwerfers (2, 3) für jedes der Raumwinkelsegmente separat durch die Steuereinrichtung (4) steuerbar ist, um ein Lichtmuster in das vordere Fahrzeugumfeld abzustrahlen, **dadurch gekennzeichnet,**
**dass** die Beleuchtungseinrichtung zur Durchführung des Verfahrens nach einem der vorangehenden Ansprüche ausgebildet ist.

10. Kraftfahrzeug mit einem oder mehreren Sensoren, **dadurch gekennzeichnet,**
**dass** es eine Beleuchtungseinrichtung gemäß Anspruch 9 umfasst.

## Claims

1. Method for lighting an environment in front of a motor vehicle (1), wherein a lighting apparatus with a control apparatus (4) and at least one headlight (2, 3) is used for illumination, wherein a plurality of contiguous solid angle segments can be illuminated by the headlight (2, 3), wherein the lighting brightness of the headlight (2, 3) for each of the solid angle segments is separately controlled by the control apparatus (4), in order to emit a light pattern into the environment in front of the vehicle, wherein, after an activation condition has been met, the headlight (2, 3) is controlled by the control apparatus (4) in such a way that a predetermined initial pattern (5, 16) is initially emitted as light pattern, after which the emitted light pattern is converted stepwise from the initial pattern (5, 16) into an information pattern (6) in a plurality of consecutive steps, wherein the information pattern (6) describes a driving-relevant piece of information, wherein the information pattern (6) is emitted as an information pattern (6) that comprises a strip in a direction of travel of the motor vehicle (1), wherein a strip width of the strip in a transverse direction, which is perpendicular to the direction of travel, is greater than or equal to a vehicle width of the motor vehicle (1), and/or which comprises two parallel strips (17, 18, 21, 22) in the direction of travel of the motor vehicle (1), which are spaced apart from each other in the transverse direction by a strip spacing (20), wherein the strip spacing (20) or the sum of the strip spacing (20) and the strip widths of both strips (17, 18, 21, 22) in the transverse direction is greater than or equal to the vehicle width of the motor vehicle (1), wherein the length of the strip of the strips (17, 18) in the information pattern is predetermined according to a distance to a further preceding or oncoming motor vehicle (33), **characterised in that** the distance to a further preceding or oncoming motor vehicle is determined by one or more sensors.

2. Method according to claim 1,
**characterised in**
**that** the driving-relevant piece of information is a vehicle width or a piece of information dependent on the vehicle width.

3. Method according to one of the preceding claims,
**characterised in**
**that** the initial pattern (5, 16) is converted stepwise into the information pattern such that in each step of the conversion for each of the solid angle segments, the lighting brightness in the currently emitted light pattern is at most as great as in a subsequently emitted light pattern or vice versa.

4. Method according to one of the preceding claims, wherein the information pattern comprises two parallel strips (17, 18, 21, 22) in the direction of travel of the motor vehicle (1),
**characterised in**
**that**, as the initial pattern (16), an initial pattern (16) is emitted which comprises two parallel strips (21, 22) in the direction of travel, which have a smaller strip separation and/or a larger width in the transverse direction than the strips (17,18) in the information pattern.

5. Method according to one of the preceding claims,
**characterised in**
**that**, as the initial pattern (5), an initial pattern (5) is emitted which comprises at least one strip in the direction of travel, wherein the strip or strips in the initial pattern (5) have a shorter length in the direction of travel than the strip or strips in the information pattern (6).

6. Method according to one of the preceding claims,
**characterised in**
**that** a curvature of the strip or strips (17, 18) in the information pattern (6) is predetermined according to a steering angle of the motor vehicle (1) and/or an own speed of the motor vehicle (1) and/or a detected route ahead.

7. Method according to one of the preceding claims,
**characterised in**
**that**, following the conversion of the initial pattern (5, 16) into the information pattern (6), the headlight (2, 3) is controlled by the control apparatus (4) in such a way that the emitted light pattern is converted stepwise from the information pattern (6) into a further information pattern in a plurality of consecutive steps.

8. Method according to one of the preceding claims,
**characterised in**
**that** before the conversion of the emitted light pattern from the initial pattern (5, 16) into the information pattern (6), the headlight (2, 3) is controlled by the control apparatus (4) in such a way that the emitted light pattern is converted stepwise from a preliminary pattern into the initial pattern in a plurality of consecutive steps, wherein the activation condition is met if the emitted light pattern corresponds to the initial pattern (5, 16).

9. Lighting apparatus for illuminating an environment in front of a motor vehicle (1), comprising a control apparatus (4) and at least one headlight (2, 3), wherein a plurality of contiguous solid angle segments can be illuminated by the headlight (2, 3), wherein the lighting brightness of the headlight (2, 3) for each of the solid angle segments can be separately controlled by the control apparatus (4), in order to emit a light pattern in the environment in front of the vehicle,
**characterised in**
**that** the lighting apparatus is designed to implement the method according to one of the preceding claims.

10. Motor vehicle with one or more sensors,
**characterised in**
**that** comprises a lighting apparatus according to claim 9.

## Revendications

1. Procédé pour éclairer un environnement de véhicule avant d'un véhicule automobile (1), dans lequel un appareil d'éclairage avec un appareil de commande (4) et au moins un phare (2, 3) est utilisé pour l'éclairage, dans lequel le phare (2, 3) peut éclairer plusieurs segments d'angle solide contigus, dans lequel la luminosité du phare (2, 3) pour chacun des segments d'angle solide est commandée séparément par l'appareil de commande (4) pour émettre un motif lumineux dans l'environnement de véhicule avant, dans lequel la satisfaction d'une condition d'activation, le phare (2, 3) est commandé par l'appareil de commande (4) de sorte qu'un premier motif initial prédéterminé (5, 16) est émis en tant que motif lumineux, après quoi le motif lumineux émis est progressivement transféré par paliers du motif initial (5, 16) à un motif d'information (6), dans lequel le motif d'information (6) décrit une information relative à la conduite, dans lequel un motif d'information (6) est émis en tant que motif d'information (6), qui comprend une bande dans un sens de la marche du véhicule automobile (1), dans lequel une largeur de bande de la bande dans une direction transversale perpendiculaire à la direction de déplacement est supérieure ou égale à une largeur de véhicule du véhicule automobile (1) et/ou qui comprend deux bandes parallèles (17, 18, 21, 22) dans le sens de la marche du véhicule automobile (1), qui sont espacées l'une de l'autre dans le sens transversal d'un espacement de bande (20), dans lequel l'espacement de bande (20) ou la somme de l'espacement de bande (20) et des largeurs de bande des deux bandes (17, 18, 21, 22) dans le sens transversal est supérieure ou égale à la largeur de véhicule du véhicule automobile (1), dans lequel la longueur de la bande ou des bandes (17, 18) est prédéterminée dans le motif d'information en fonction d'une distance à un autre véhicule automobile (33) précédent ou venant en sens inverse, **caractérisé en ce que** la distance par rapport à un véhicule précédent ou venant en sens inverse d'un autre véhicule automobile est déterminée par un ou plusieurs capteurs.

2. Procédé selon la revendication 1,
**caractérisé en ce**
**que** l'information relative à la conduite est une largeur de véhicule ou une information dépendant de la largeur de véhicule.

3. Procédé selon l'une quelconque des revendications précédentes,
**caractérisé en ce**
**que** le motif initial (5, 16) est transféré par paliers dans le motif d'information de sorte qu'à chaque palier du transfert pour chacun des segments d'angle solide, la luminosité dans le motif lumineux actuellement émis est au maximum aussi grande que dans un motif lumineux émis ensuite dans le temps ou inversement.

4. Procédé selon l'une quelconque des revendications précédentes, dans lequel le motif d'information comprend deux bandes parallèles (17, 18, 21, 22) dans le sens de la marche du véhicule automobile (1),
**caractérisé en ce**
**qu'**un motif initial (16) est émis en tant que motif initial (16), qui comprend deux bandes parallèles (21, 22) dans le sens de la marche, qui présentent un espacement de bande plus petit et/ou une largeur plus grande dans le sens transversal que les bandes (17, 18) dans le motif d'information.

5. Procédé selon l'une quelconque des revendications précédentes,
**caractérisé en ce**
**qu'**un motif initial (5) est émis en tant que motif initial (5), qui comprend au moins une bande dans le sens de la marche, dans lequel la ou les bandes dans le motif initial (5) présentent une longueur plus petite dans le sens de la marche que la ou les bandes dans le motif d'information (6).

6. Procédé selon l'une quelconque des revendications précédentes,
**caractérisé en ce**
**qu'**une courbure de la bande ou des bandes (17, 18) dans le motif d'information (6) est prédéterminée en fonction d'un angle de braquage du véhicule automobile (1) et/ou d'une vitesse propre du véhicule automobile (1) et/ou d'un parcours détecté à l'avant.

7. Procédé selon l'une quelconque des revendications précédentes,
**caractérisé en ce**
**que** suite au transfert du motif initial (5, 16) dans le motif d'information (6), les phares (2, 3) sont commandés par l'appareil de commande (4) de sorte que le motif lumineux émis est progressivement transféré par paliers du motif d'information (6) à un autre modèle d'informations.

8. Procédé selon l'une quelconque des revendications précédentes,
**caractérisé en ce**
**qu'**avant le transfert du motif lumineux émis du motif initial (5, 16) au motif d'information (6), les phares (2, 3) sont commandés par l'appareil de commande (4) de sorte que le motif lumineux émis est progressivement transféré par paliers d'un motif préliminaire au motif initial, dans lequel la condition d'activation est satisfaite lorsque le motif lumineux émis correspond au motif initial (5, 16).

9. Appareil d'éclairage pour éclairer un environnement de véhicule avant d'un véhicule automobile (1), comprenant un appareil de commande (4) et au moins un phare (2, 3), dans lequel plusieurs segments d'angle solide contigus peuvent être éclairés par le phare (2, 3), dans lequel la luminosité du phare (2, 3) peut être commandée séparément pour chacun des segments d'angle solide par l'appareil de commande (4) pour émettre un motif lumineux dans l'environnement de véhicule avant,
**caractérisé en ce**
**que** l'appareil d'éclairage est conçu pour mettre en œuvre le procédé selon l'une quelconque des revendications précédentes.

10. Véhicule automobile avec un ou plusieurs capteurs,
**caractérisé en ce**
**qu'**il comprend un appareil d'éclairage selon la revendication 9.
